# EUROPÄISCHE PATENTSCHRIFT

(11) **EP 0 965 236 B1**
(45) Veröffentlichungstag und Bekanntmachung des Hinweises auf die Patenterteilung: **17.11.2004**
(21) Anmeldenummer: 97909119.6
(22) Anmeldetag: 09.09.1997
(51) Int. Cl.: H04Q 7/24, H04Q 7/38

(54) **VERFAHREN ZUM STEUERN DES AUFBAUS VON TELEKOMMUNIKATIONSVERBINDUNGEN MIT ÜBERTRAGUNGSKANALANFORDERUNGEN UNTERSCHIEDLICHEN NETZABSCHLÜSSEN**
PROCEDURE FOR CONTROLLING THE SET-UP OF CALLS WITH TRANSMISSION CHANNEL REQUIREMENTS OF DIFFERENT NETWORK TERMINATIONS
PROCEDE POUR PILOTER L'ETABLISSEMENT DE LIAISONS DE TELECOMMUNICATIONS AVEC DES TERMINAUX DE RESEAU DIFFERENTS EN TERMES DE DEMANDES DE VOIE DE TRANSMISSION

(30) Priorität: 10.09.1996 DE 19636758
(43) Veröffentlichungstag der Anmeldung: 22.12.1999
(73) Patentinhaber: SIEMENS AKTIENGESELLSCHAFT, 80333 München (DE)
(72) Erfinder: BIEDERMANN, Rolf, D-48683 Ahaus (DE); KORDSMEYER, Martin, D-48477 Hörstel (DE); DICKER, Olaf, D-46459 Rees (DE)
(86) Internationale Anmeldenummer: PCT/DE1997/002004
(87) Internationale Veröffentlichungsnummer: WO 1998/010633

(56) Entgegenhaltungen:
- WO-A-93/21719
- PIQUET N.: "DECT/RLL ACCESS SYSTEMS FOR NEIGHBOURHOOD TELEPHONY" TEC - ASCOM TECHNICAL MAGAZINE, Nr. 1, 1996, Seiten 10-14, XP000624062
- KATRUFF M: "ISDN...on radio in the local loop near you" TELCOM REPORT INTERNATIONAL, 1996, SIEMENS AG, GERMANY, Bd. 19, Nr. 5-6, ISSN 0344-4880, Seiten 34-37, XP000198331

## Beschreibung

Verfahren zum Steuern des Aufbaus von Telekommunikationsverbindungen in als lokale Nachrichtenübertragungsschleifen von Telekommunikationssystemen dienenden Telekommunikationsteilsystemen mit bezüglich der Übertragungskanalanforderungen unterschiedlichen Netzabschlüssen, insbesondere "ISDN/PSTN ↔ DECT-spezifische RLL/WLL"-Systeme

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrecke drahtgebunden ist oder auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z. B. nach Funkstandards wie DECT, GSM, WACS oder PACS, IS-54, PHS, PDC etc. [vgl. IEEE Communications Magazine, January 1995, Seiten 50 bis 57; D. D. Falconer et al:"Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht
(1) in Form eines Bildes,
(2) als gesprochenes Wort,
(3) als geschriebenes Wort,
(4) als verschlüsseltes Wort oder Bild
übertragen werden. Die Übertragungsart gemäß (1) ... (4) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Verfahren zum Steuern des Aufbaus von Telekommunikationsverbindungen in als lokale Nachrichtenübertragungsschleifen von Telekommunikationssystemen dienenden Telekommunikationsteilsystemen mit bezüglich der Übertragungskanalanforderungen unterschiedlichen Netzabschlüssen, insbesondere "ISDN/PSTN ↔ DECT-spezitische RLL/WLL"-Systeme gemäß dem Oberbegriff des Patentanspruches 1.

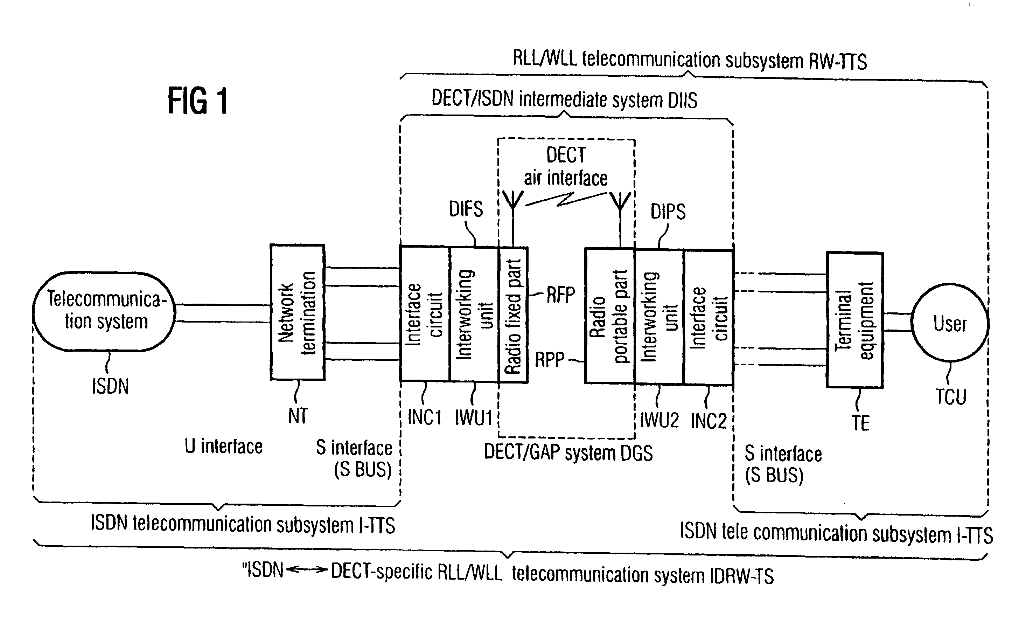

FIGUR 1 zeigt ausgehend von den Druckschriften "Nachrichtentechnik Elektronik, Berlin 45 (1995) Heft 1, Seiten 21 bis 23 und Heft 3, Seiten 29 und 30" sowie IEE Colloquium 1993, 173; (1993), Seiten 29/1 - 29/7; W. Hing, F. Halsall: "Cordless access to the ISDN basic rate service" auf der Basis eines **D**ECT/**I**SDN **I**ntermediate **S**ystems DIIS gemäß der ETSI-Publikation prETS 300xxx, Version 1.09, 31. Juli 1996 ein "ISDN ↔ DECT-spezifisches **R**LL/**W**LL"-**T**elekommunikationssystem IDRW-TS (**I**ntegrated **S**ervices **D**igital **N**etwork ↔ **R**adio in the **L**ocal **L**oop/**W**ireless in the **L**ocal **L**oop) mit einem ISDN-Telekommunikationsteil**s**ystem [vgl. Druckschrift "Nachrichtentechnik Elektronik, Berlin 41-43, **T**eil: 1 bis 10, **T**1: (1991) Heft 3, Seiten 99 bis 102; **T**2: (1991) Heft 4, Seiten 138 bis 143; **T**3: (1991) Heft 5, Seiten 179 bis 182 und Heft 6, Seiten 219 bis 220; **T**4: (1991) Heft 6, Seiten 220 bis 222 und (1992) Heft 1, Seiten 19 bis 20; **T**5: (1992) Heft 2, Seiten 59 bis 62 und (1992) **H**eft 3, Seiten 99 bis 102; **T**6: (1992) Heft 4, Seiten 150 bis 153; **T**7: (1992) Heft 6, Seiten 238 bis 241; **T**8: (1993) Heft 1, Seiten 29 bis 33; **T**9: (1993) Heft 2, Seiten 95 bis 97 und (1993) Heft 3, Seiten 129 bis 135; T10: (1993) Heft 4, Seiten 187 bis 190;"] und einem DECT-spezifischen **R**LL/**W**LL-**T**elekommunikationsteilsystem RW-TTS.

Das DECT/ISDN Intermediate System DIIS bzw. das RLL/WLL-Telekommunikationsteilsystem RW-TTS basiert dabei vorzugsweise auf ein **D**ECT/**G**AP-System DGS [**D**igital **E**nhanced (früher: **E**uropean) **C**ordless **T**elecommunication; vgl. (**1**): Nachrichtentechnik Elektronik 42 (1992) Jan./Feb. Nr. 1, Berlin, DE; U. Pilger "Struktur des DECT-Standards", Seiten 23 bis 29 **in Verbindung mit** der ETSI-Publikation ETS 300175-1...9, Oktober 1992; (**2**): Telcom Report 16 (1993), Nr. 1, J. H. Koch: "Digitaler Komfort für schnurlose Telekommunikation - DECT-Standard eröffnet neue Nutzungsgebiete", Seiten 26 und 27; (**3**): tec 2/93 - Das technische Magazin von Ascom "Wege zur universellen mobilen Telekommunikation", Seiten 35 bis 42; (**4**): Philips Telecommunication Review Vol. 49, No. 3, September 1991, R. J. Mulder:" DECT, a universal cordless access system"; **(5):** WO 93/21719 (FIG 1 bis 3 mit dazugehöriger Beschreibung)]. Der GAP-Standard (**G**eneric **A**ccess **P**rofile) ist eine Untermenge des DECT-Standards, dem die Aufgabe zukommt, die Interoperabilität der DECT-Luftschnittstelle für Telefonanwendungen sicherzustellen (vgl. ETSI-Publikation prETS 300444, April 1995).

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A. Mann:"Der GSM-Standard - Grundlage für digitale europäische Mobilfunknetze", Seiten 137 bis 152). Stattdessen ist es im Rahmen eines hybriden Telekommunikationssystems auch möglich, daß das ISDN-Telekommunikationsteilsystem I-TTS als GSM-System bzw. PSTN-System (Public Switched Telecommunication Network) ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z.B. DECT-Kanälen) in klassischen leitungsgebundenen Telekommunikationssystemen, wie dem ISDN, gewinnt zunehmend an Bedeutung, insbesondere vor dem Hintergrund zukünftiger alternativer Netzbetreiber ohne eigenes komplettes Drahtnetz.

So sollten z. B. bei dem RLL/WLL-Telekommunikationsteilsystem RW-TTS die drahtlose Anschlußtechnik RLL/WLL (**R**adio in the **L**ocal **L**oop/**W**ireless in the **L**ocal **L**oop) z. B. unter der Einbindung des DECT-Systems DS dem ISDN-Teilnehmer ISDN-Dienste an Standard-ISDN-Schnittstellen verfügbar gemacht werden (vgl. FIGUR 1).

In dem "ISDN ↔ DECT-spezifischen RLL/WLL"-Telekommunikationssystem IDRW-TS nach FIGUR 1 ist ein Telekommunikationsteilnehmer (Benutzer) TCU (**T**ele-**C**ommunication **U**ser) mit seinem Endgerät TE (**T**erminal **E**ndpoint; **T**erminal **E**quipment) z. B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystem RW-TTS enthaltene - DECT/ISDN Intermediate System DIIS (erstes Telekommunikationsteilsystem), eine weitere standardisierte S-Schnittstelle (S-BUS), einen Netzabschluß NT (Network Termination) und eine standardisierte U-Schnittstelle des ISDN-Telekommunikationsteilsystems) I-TTS (zweites Telekommunikationsteilsystem) in die ISDN-Welt mit den darin verfügbaren Diensten eingebunden.

Das erste Telekommunikationsteilsystem DIIS besteht im wesentlichen aus zwei Telekommunikationsschnittstellen, einer ersten Telekommunikationsschnittstelle DIFS (**D**ECT Intermediate **F**ixed **S**ystem) und einer zweiten Telekommunikationsschnittstelle DIPS (**D**ECT **I**ntermediate **P**ortable **S**ystem), die drahtlos, z. B. über eine DECT-Luftschnittstelle, miteinander verbunden sind. Wegen der quasi-ortsgebundenen ersten Telekommunikationsschnittstelle DIFS bildet das erste Telekommunikationsteilsystem DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

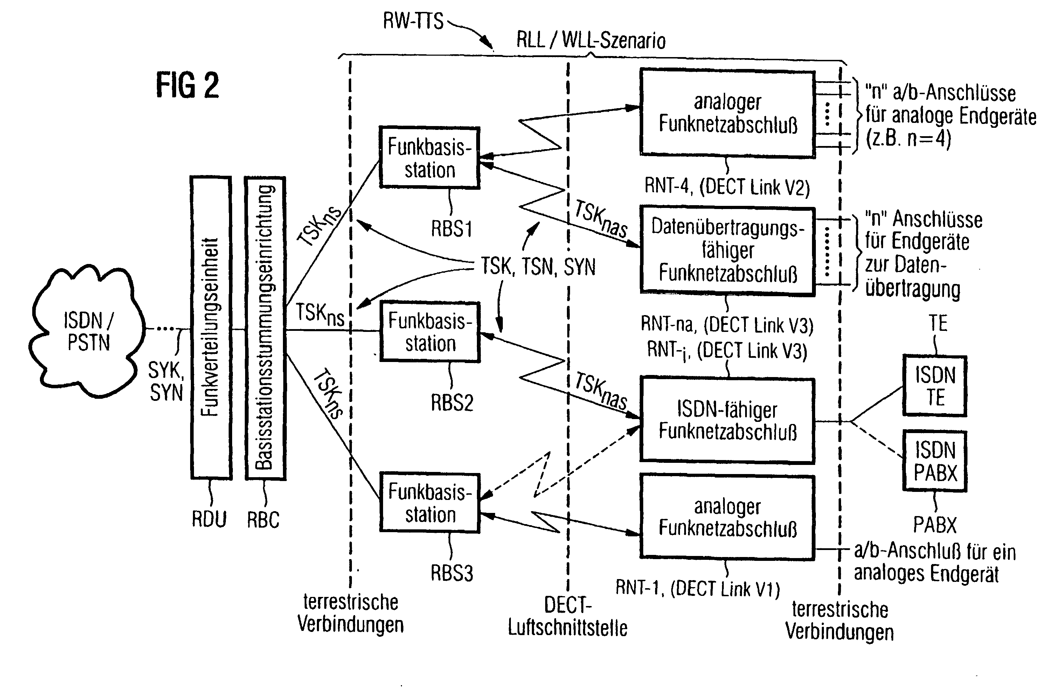

FIGUR 2 zeigt ausgehend von dem "ISDN ↔ DECT-spezifischen RLL/WLL"-Telekommunikationssystem IDRW-TS mit dem RLL/WLL-Telekommunikationsteilsystem RW-TTS gemäß FIGUR 1 ein typisches RLL/WLL-Szenario. Die drahtlose Anschlußtechnik RLL/WLL (**R**adio in the Local **L**oop/**W**ireless in the **L**ocal **L**oop) z. B. unter der Einbindung von einem DECT-System soll im vorliegenden Fall einem ISDN/PSTN-Teilnehmer ISDN/PSTN-Dienste an Standard-ISDN/PSTN-Schnittstellen verfügbar machen. Die Verwendung von Funkkanälen (z. B. DECT-Kanälen) in klassischen leitungsgebundenen Telekommunikationssystemen, wie dem ISDN/PSTN, gewinnt zunehmend an Bedeutung, insbesondere vor dem Hintergrund zukünftiger alternativer Netzbetreiber ohne eigenes komplettes Drahtnetz.

Das dargestellte RLL/WLL-Szenario besteht z. B. aus dem derzeit auf dem Markt erhältlichen Siemens DECTlink-System der Version 1 (DECTlink V1) und den daraus durch Weiterentwicklung ableitbaren DECTlink-Systemen der Versionen 2 und 3 (DECTlink V2, DECTlink V3).

In dem vorstehend erwähnten, bekannten DECTlink V1-System wurde ein Funknetzabschluß (Radio Network Termination) mit einem analogen a/b-Anschluß eingesetzt. Man spricht in diesem Fall von einem Funknetzabschluß RNT-1. Der Funknetzabschluß RNT-1 weist eine Funkverbindung zu einer Funkbasisstation RBS1...RBS3 (Radio Base-Station) z. B. der Funkbasisstation RBS3 auf. Der Funknetzabschluß RNT-1 benötigt maximal einen Nutzkanal (Traffic Channel). Die Daten auf diesem Verkehrskanal sind generell mit 32 kbit/s ADPCM sprachcodiert. Die Verwendung eines Sprachcoders hat zur Folge, daß maximale Datenraten (z. B. von Modem- oder Faxgeräten) von 9,6 kbit/s über einen 32 kbit/s DECT-Kanal nur unzureichend übertragen werden können. Die 9,6 kbit/s können zudem nur unter optimalen Bedingungen erreicht werden.

Darüber hinaus ist es möglich, einen Funknetzabschluß mit "n" analogen a/b-Anschlüssen einzusetzen. In dem DECTlink-System der Version 2 (DECTlink V2) wurde ein Funknetzabschluß RNT-4 mit vier a/b-Anschlüssen eingeführt. Die RNT-4 benötigt maximal bis zu vier Nutzkanäle (Traffic Channels) gleichzeitig. Beim Funknetzabschluß RNT-4 wurden diese Nutzkanäle wie beim Funknetzabschluß RNT-1 generell ADPCM-codiert. Um aber die DECT-Luftschnittstelle zu entlasten, können bei der DECTlink V2 die einzelnen Verbindungen für den Funknetzabschluß RNT-4 über verschiedene Funkbasisstationen RBS (z. B. die drei Funkbasisstationen RBS1...RBS3) betrieben werden. Im dargestellten Fall ist der Funknetzabschluß RNT-4 z. B. mit der Funkbasisstation RBS1 verbunden. Der Verbindungsaufbau wird dabei von einer Funkverteilungseinheit RDU (Radio Distribution Unit) durchgeführt. Zwischen der Funkverteilungseinheit RDU und den einzelnen Funkbasisstationen ist eine Basisstationssteuerungseinrichtung RBC (Radio Basestation Controller) vorgesehen. Die Basisstationssteuerungseinrichtung RBC ist ein reiner "Schicht 1"-Baustein. Er demultiplext die Daten der Funkverteilungseinheit und paßt sie an die Schnittstelle zu der jeweilgen Funkbasisstation an. Die Funkbasisstation überträgt die Daten über die DECT-Funkschnittstelle zum Funknetzabschluß (RNT-4).

Für einen ISDN-Teilnehmeranschluß ist die in den vorstehend genannten DECTlink-Systemen zur Verfügung stehende Übertragungsrate nicht ausreichend. Für ISDN werden nämlich pro B-Kanal 64 kbit/s mit definierten Bitfehlerraten gefordert.

Um die DECT-Kanalkapazität optimal ausnutzen zu können, muß zwischen der Übertragung von Sprache und der Übertragung von Daten unterschieden werden. Für die Übertragung von Daten müssen mehr DECT-Kanäle zur Verfügung gestellt werden als für die Übertragung von Sprache.

In der ETSI-Publikation prETS 300434-1; Januar 1996 (DECT and ISDN Inter Working For End System Configuration) ist der 64 kbit/s LU7-Service für die Datenübertragung über DECT definiert. Bei der Datenrate orientiert man sich an den ISDN-B-Kanal.

Die ETSI-Publikation prETS 300xxx ; Version 1.09; 31. Juli 1996 (DECT/ISDN Inter working for Intermediate System Configuration) beschreibt die Übertragung einer ISDN-Schnittstelle über den DECT-Funkkanal. Dabei findet in dem DECT-spezifischen RLL/WLL-System in einem Funkfestteil (Radio Fixed Part) und einem Funkmobilteil (Radio Portable Part) eine Umsetzung des ISDN-D-Kanal Protokolls über die IWU-Protokollschicht (Inter Working Unit) auf das DECT-Protokoll statt (vgl. DE-Patentanmeldungen 19625142.7 und 19625141.9). Die Protokolldaten werden in der C-Ebene z.B. im C_{f}-Signalisierungskanal über den DECT-Funkkanal übertragen. An einem ISDN-spezifischen Funknetzabschluß, als RNT₁ bezeichnet, wird anschließend der ISDN-Anschluß wieder zur Verfügung gestellt.

Diese Überlegungen haben zum DECTlink-System der Version 3 (DECTlink V3) geführt. Das DECTlink V3-System weist z. B. einen ISDN-fähigen, DECT-spezifischen Funknetzabschluß RNTᵢ für eine terrestrisch anschließbare ISDN-Endeinrichtung TE (Terminal **E**ndpoint) und/oder eine terrestrisch anschließbare ISDN-Nebenstellenanlage PABX (**P**rivate **A**utomatic **B**ranch E**x**change) sowie einen Datenservice unterstützenden, DECT-spezifischen Funknetzabschluß RNT-n_{d} mit z. B. "n=4" a/b-Anschlüssen zur Datenübertragung für terrestrisch anschließbare Datenendgeräte auf. Die Funknetzabschlüsse RNTᵢ, RNT-n_{d} sind über eine mehrere Funkkanäle aufweisende DECT-Luftschnittstelle z. B. mit den drei Funkbasisstationen RBS1...RBS3 verbunden.

Bei dem Funknetzabschluß RNT-n_{d} wären somit wieder maximal vier Nutzkanäle (Traffic Channels) gleichzeitig möglich. Bei dem Funknetzabschluß RNTᵢ wären es zwei Nutzkanäle (2 B-Kanäle) und ein Signalisierungskanal (D-Kanal).

Wie bei dem DECTlink V2-System ist es im DECTlink V3-System wieder möglich, die verschiedenen Nutz- und Signalisierungskanäle zur gleichmäßigen Auslastung des DECT-Funkkanals über verschiedene Funkbasisstationen RBS1...RBS3 zu betreiben.

Im Unterschied zum DECTlink V2-System werden bei dem DECTlink V3-System zwei verschiedene DECT-Übertragungswege (Bearer) unterstützt, der 32 kbit/s ADPCM codierte Sprachservice sowie der 64 kbit/s LU7-Datenservice. Der Datenservice benötigt im Gegensatz zum Sprachservice zwei DECT-Zeitschlitze.

Es wird bei den Funknetzabschlüssen RNTᵢ, RNT-n_{d} zwischen der Übertragung von Sprachdaten und z. B. Modemdaten unterschieden, um die DECT-Kanalkapazität besser ausnutzen zu können. Für Sprachverbindungen werden generell nur Verbindungen mit 32 kbit/s ADPCM codierten Kanälen aufgebaut. Für Datenübertragungen werden Kanäle mit dem 64 kbit/s LU7-Datenservice aufgebaut.

Die Anzahl der jeweiligen Funknetzabschlüsse RNT₁, RNT-n_{d} und die Anzahl der Funkbasisstationen RBS1...RBS3 ist prinzipiell frei wählbar; sie wird sich aber vorzugsweise an den Einsatzort des "ISDN/PSTN ↔ DECT-spezifischen RLL/WLL"-Telekommunikationssystems richten (Stichwort: Netzplanung).

Die Funknetzabschlüsse RNT-1, RNT-4, RNT₁, RNT-n_{d} und die Funkbasisstationen RBS1...RBS3 bilden das DECT-spezifische RLL/WLL-Telekommunikationsteilsystem RW-TTS bzw. das RLL/WLL-Szenario. Das RLL/WLL-Telekommunikationsteilsystem RW-TTS ist netzabschlußseitig mit den genannten leitungsgebundenen Endgeräten und netzseitig - wie bereits erwähnt - über eine Basisstationssteuerungseinrichtung RCB und eine Funkverteilungseinheit RDU mit dem ISDN/PSTN-Telekommunikationssystem ISDN, PSTN (ISDN/PSTN-Netz) verbunden. Zwischen dem ISDN/PSTN-Telekommunikationssystem ISDN, PSTN und der Funkverteilungseinheit RDU gibt es einen Systemkanal SYK, auf dem Systemnachrichten SYN übertragen werden. Die Systemnachrichten SYN enthalten dabei z. B. ISDN-Signalisierungsnachrichten und/oder ISDN/PSTN-Nutznachrichten. Zwischen den Funkbasisstationen RBS1...RBS3 und der Basisstationssteuerungseinrichtung RBC einerseits und zwischen den Funkbasisstationen RBS1...RBS3 und den Funknetzabschlüssen RNT-1, RNT-4, RNT₁, RNT-n_{d} andererseits gibt es Teilsystemkanäle TSK, auf den die Systemnachrichten SYN und Teilsystemnachrichten TSN übertragen werden. Die Teilsystemkanäle TSK enthalten einerseits netzabschlußseitige Teilsystemkanäle TSK_{nas'} die den Funkkanälen entsprechen und netzseitige Teilsystemkanäle TSKₙₛ.

Durch den Funknetzabschluß RNTᵢ wird dem Teilnehmer ein ISDN-Anschluß zur Verfügung gestellt. Der Funknetzabschluß RNTᵢ kann zu diesem Zweck entweder auf der C-Ebene einen C_{f}-Kanal (f=fast) zur Übertragung von Signalisierungsdaten oder auf der U-Ebene einen Nutzdatenkanal mit der Kapazität 32 kbit/s oder 64 kbit/s über die DECT-Luftschnittstelle von der Netzseite anfordern.

Der Funknetzabschluß RNT-n_{d} stellt vier Teilnehmern jeweils einen datenfähigen Anschluß zur Verfügung.

Der Funknetzabschluß RNT-n_{d} kann zu diesem Zweck ebenfalls einen Nutzdatenkanal mit der Kapazität 32 kbit/s oder 64 kbit/s über die DECT-Luftschnittstelle von der Netzseite anfordern.

Für die Weiterleitung des C_{f}-Kanals auf terrestrischer Seite (zwischen Funkbasisstation und Funkverteilungseinheit) ist eine bestimmte Kanalressource (erster Kanal der netzseitigen Teilsystemkanäle) notwendig. Die Anzahl der ersten Kanäle zwischen der Funkbasisstation und der Funkverteilungseinheit ist vorzugsweise begrenzt. Im vorliegenden Fall sind es z. B. vier erste Kanäle.

Für die Weiterleitung des Nutzdatenkanals auf terrestrischer Seite (zwischen Funkbasisstation und Funkverteilungseinheit) ist eine weitere - im vorliegenden Fall unbegrenzte - Kanalressource notwendig.

Zur Übertragung dieser Kanäle wird in dem Telekommunikationsteilsystem, respektive der Funkbasisstation und dem Funknetzabschluß, jeweils auf der MAC-Protokollschicht mit einer "B-field setup Prozedur für advanced connections" (vgl. ETSI-Publikation ETS 300175-3, Oktober 1992, Kap. 7.3 und insbesondere Kap. 7.3.3) über die DECT-Luftschnittstelle eine Verbindung eingerichtet.

Bedingt durch die beschränkte Anzahl der ersten Kanäle darf eine Funkbasisstation nicht den Aufbau von mehr als vier MAC-Verbindungen mit jeweils einem C_{f}-Kanal zur Signalisierung zulassen.

Die DECT-Luftschnittstelle erlaubt aber den Empfang eines fünften Aufbauwunsches einer MAC-Verbindung.

Das Problem besteht also darin, daß
1) über die DECT-Luftschnittstelle mehr Kanalressourcen (C_{f}-Kanäle) zur Verfügung stehen, als auf der terrestrischen Seite abgedeckt werden können,
2) der Nutzdatenkanal des Funknetzabschlusses RNT-n_{d} mit der Kapazität von 32 kbit/s anhand der "B-field setup Prozedur für advanced connections" nicht von C_{f}-Kanal unterschieden werden kann.

Der Nutzdatenkanal des Funknetzabschlusses RNT₁ mit der Kapazität von 32 kbit/s kann von C_{f}-Kanal des Funknetzabschlusses RNT₁ anhand des Übertragungswegparameters "LCN" (Logical Connection Number) unterschieden werden.

Eine bisher angedachte Problemlösung beruht auf der Auswertung des Übertragungswegparameters "LCN" und des Parameters "PMID" (**P**ortable **M**AC **ID**entifier) der MAC-Nachricht "BEARER_REQUEST" (vgl. ETSI-Publikation ETS 300175-3, Oktober 1992, Kap. 7.3.3.2). Mit diesen Parametern würde die Funkbasisstation bei der Funkverteilungseinheit nachfragen, ob der angeforderte Kanal ein C_{f}-Kanal ist.

Die Funkverteilungseinheit verwaltet die Anmeldedaten und kann somit mit den Parametern "PMID" und "LCN" eindeutig den angeforderten Kanal identifizieren.

Diese Lösung ist nicht praktikabel, weil durch die Telekommunikation zwischen Funkbasisstation und Funkverteilungseinheit die Verbindungsaufbauzeiten unakzeptabel groß werden würden.

Die der Erfindung zugrundeliegende Aufgabe besteht darin, in als lokale Nachrichtenübertragungsschleifen von Telekommunikationssysteme dienenden Telekommunikationsteilsystemen mit bezüglich der Übertragungskanalanforderungen unterschiedlichen Netzabschlüssen, insbesondere "ISDN/PSTN **↔** DECT-spezifische RLL/WLL"-Systeme, den Aufbau von Telekommunikationsverbindungen effizient und zuverlässig steuern zu können.

Diese Aufgabe wird ausgehend von dem im Oberbegriff des Patentanspruches 1 definierten Verfahren durch die in dem Kennzeichen angegebenen Merkmale gelöst.

Die der Erfindung zugrundeliegende Idee besteht darin, den Aufbau von Telekommunikationsverbindungen in als lokale Nachrichtenübertragungsschleifen von Telekommunikationssysteme dienenden Telekommunikationsteilsystemen mit bezüglich der Übertragungskanalanforderungen unterschiedlichen Netzabschlüssen der eingangs angegebenen Art dadurch zu steuern, daß von einem ersten Netzabschluß der von diesem gewünschte, angeforderte Übertragungskanal in einer Verbindungsaufbaunachricht des Netzabschlusses zur Gegenstelle in dem Telekommunikationsteilsystem explizit z. B. in Form eines Parameters, angegeben wird.

Dadurch kann die Gegenstelle - insbesondere, wenn die von den Netzabschlüssen angeforderten Kanäle bezüglich der Übertragungskapazität gleichgroß sind - einerseits die Netzabschlüsse voneinander unterscheiden und andererseits dementsprechend den Netzabschlüssen den jeweils angeforderten Kanal zuordnen.

Weitere vorteilhafte Weiterbildungen der Erfindung sind in den Unteransprüchen angegeben.

Ein Ausführungsbeispiel der Erfindung wird ausgehend von den FIGUREN 1 und 2 anhand der FIGUR 3 erläutert.

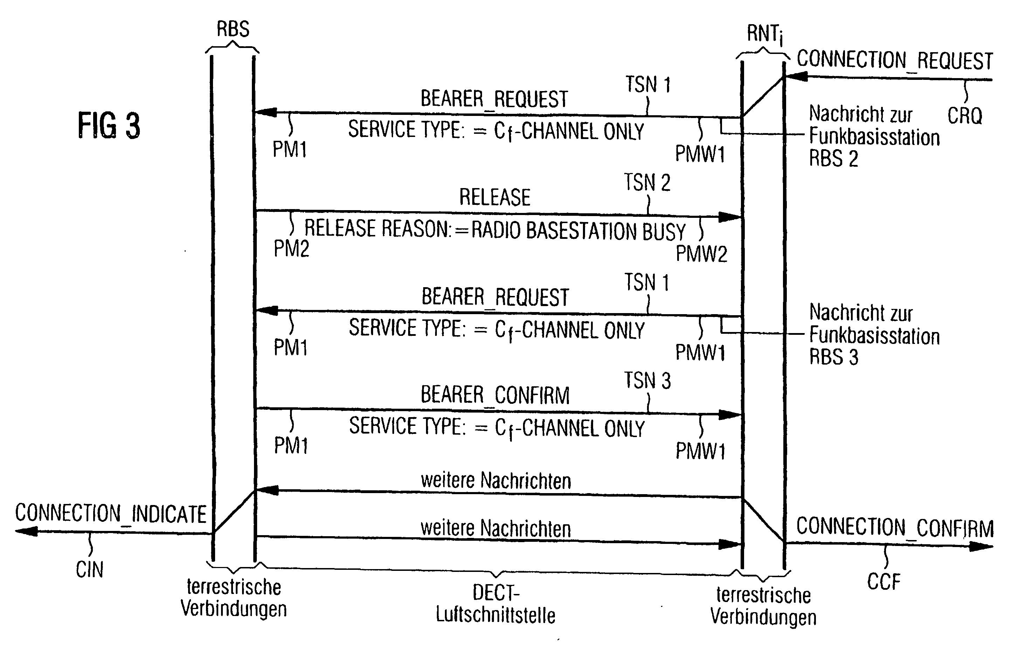

FIGUR 3 zeigt anhand eines Anreiz-Zustands-Diagramms wie in als lokale Nachrichtenübertragungsschleifen von Telekommunikationssystemen dienenden Telekommunikationsteilsystemen mit bezüglich der Übertragungskanalanforderungen unterschiedlichen Netzabschlüssen, insbesondere "ISDN/PSTN ↔ DECT-spezifische RLL/WLL"-Systeme, der jeweilige Aufbau von Telekommunikationsverbindungen effizient und zuverlässig gesteuert werden kann.

Der Funknetzabschluß RNT₁ sendet der Funkbasisstation RBS2 den Verbindungsaufbauwunsch nach Erhalt einer MAC-Nachricht "CONNECTION_REQUEST" CRQ (vgl. ETSI-Publikation ETS 300175-3, Oktober 1992, Kap. 8, 8.1, 8.1.1) mit einer der MAC-Nachricht "BEARER_REQUEST" (vgl. ETSI-Publikation ETS 300175-3, Oktober 1992, Kap. 7.3.3.2) entsprechenden ersten Teilsystemnachricht TSN1 über die DECT-Luftschnittstelle. Diese Teilsystemnachricht TSN1 enthält einen ersten Parameter "SERVICE TYPE" mit einem ersten Parameterwert "C_{f}-CHANNEL ONLY".

Die Funkbasisstation RBS2 erkennt an dem ersten Parameterwert, daß der Funknetzabschluß RNT₁ die Verbindung aufbauen möchte und sie erkennt insbesondere, daß auf terrestrischer Seite ein erster Kanal der netzseitigen Teilsystemkanäle TSKₙₛ zum Verbinden der Signalisierungskanäle mit den Systemkanälen SYK bzw. zum Weiterleiten der Signalisierungskanäle der Telekommunikationsteilsysteme RW-TTS an die Telekommunikationssysteme ISDN, PSTN (eine beschränkte Kanalressource) benötigt wird.

Wenn die Funkbasisstation RBS2 die geforderte Kanalressource nicht zur Vefügung stellen kann, weil sämtliche erste Kanäle belegt sind, wird der Verbindungswunsch zurückgewiesen, indem die Funkbasisstation RBS2 eine der MAC-Nachricht "RELEASE" (vgl. ETSI-Publikation ETS 300175-3, Oktober 1992, Kap. 7.3.3.10) entsprechenden zweiten Teilsystemnachricht TSN2 zu dem Funknetzabschluß RNTᵢ überträgt. Die zweite Teilsystemnachricht TSN2 gibt durch einen in der Teilsystemnachricht TSN2 enthaltenen zweiten Parameter "RELEASE REASON" mit einem zweiten Parameterwert "RADIO BASESTATION BUSY" den Grund der Verbindungszurückweisung an.

Der Funknetzabschluß RNTᵢ wiederholt daraufhin die vorstehend beschriebene Verbindungsanforderungsprozedur mit einer anderen Funkbasisstation RBS2, z.B. der Funkbasisstation RBS3.

Da die Funkbasisstation RBS3 die geforderte Kanalressource zur Vefügung stellen kann, weil zumindest ein erster Kanal frei ist, wird der Verbindungswunsch angenommen, indem die Funkbasisstation RBS2 eine der MAC-Nachricht "BEARER_CONFIRM" (vgl. ETSI-Publikation ETS 300175-3, Oktober 1992, Kap. 7.3.3.3) entsprechenden dritten Teilsystemnachricht TSN3 zu dem Funknetzabschluß RNTᵢ überträgt. Es werden dann noch weitere Nachrichten zwischen der Funkbasisstation RBS3 und dem Funknetzabschluß RNTᵢ übertragen, bis die Funkbasisstation RBS3 eine MAC-Nachricht "CONNECTION_INDICATE" CIN (vgl. ETSI-Publikation ETS 300175-3, Oktober 1992, Kap. 8, 8.1, 8.1.1) zur Funkverteilungseinheit sendet. Anschließend werden nochmals weitere Nachrichten zwischen der Funkbasisstation RBS3 und dem Funknetzabschluß RNTᵢ übertragen, bis der Funknetzabschluß RNTᵢ eine MAC-Nachricht "CONNECTION_CONFIRM" CCF (vgl. ETSI-Publikation ETS 300175-3, Oktober 1992, Kap. 8, 8.1, 8.1.1) zur Teilnehmerstelle sendet.

## Patentansprüche

1. Verfahren zum Steuern des Aufbaus von Telekommunikationsverbindungen in als lokale Nachrichtenübertragungsschleifen von Telekommunikationssystemen dienenden Telekommunikationsteilsystemen mit bezüglich der Übertragungskanalanforderungen unterschiedlichen Netzabschlüssen, insbesondere "ISDN/PSTN ↔ DECT-spezifische RLL/WLL"-Systeme, wobei
a) in den Telekommunikationssystemen (ISDN, PSTN) auf Systemkanälen (SYK) Systemnachrichten (SYN) übertragen werden,
b) die Telekommunikationsteilsysteme (RW-TTS) mehrere Teilsystemkanäle (TSK) zur Übertragung von Teilsystemnachrichten (TSN) und der Systemnachrichten (SYN) enthalten,
c) die Telekommunikationsteilsysteme (RW-TTS) erste Telekommunikationsschnittstellen (RBS1, RBS2, RBS3) aufweisen, die über netzabschlußspezifische Teilsystemkanäle (TSKₙₐₛ) mit als die Netzabschlüsse ausgebildete zweite Telekommunikationsschnittstellen (RNTᵢ) und/oder dritte Telekommunikationsschnittstellen (RNTn_{d}) sowie über netzspezifische Teilsystemkanäle (TSKₙₛ) mit den Systemkanälen (SYK) verbunden sind,
d) die Telekommunikationsteilsysteme (RW-TTS) über die Telekommunikationsschnittstellen (RBS1, RBS2, RBS3, RNTᵢ, RNTn_{d}) in die Telekommunikationssysteme (ISDN, PSTN) eingebunden sind,
e) die netzabschlußspezifischen Teilsystemkanäle (TSKₙₐₛ) Signalisierungskanäle und Nutzdatenkanäle enthalten,
f) die Nachrichten von bzw. zu den zweiten Telekommunikationsschnittstellen (RNT₁) über die Signalisierungskanäle und/oder die Nutzdatenkanäle übertragen werden und die Nachrichten von bzw. zu den dritten Telekommunikationsschnittstellen (RNTn_{d}) über die Nutzdatenkanäle übertragen werden,
g) erste Teilsystemnachrichten (TSN1) mit ersten Parametern (PM1) von den zweiten Telekommunikationsschnittstellen (RNT₁) und/oder den dritten Telekommunikationsschnittstellen (RNTn_{d}) zu den ersten Telekommunikationsschnittstellen (RBS1, RBS2, RBS3) zum Verbindungsaufbau übertragen werden,
**dadurch gekennzeichnet,daß**
h) die ersten Parameter (PM1) der ersten Teilsystemnachrichten (TSN1) mit die Inhalte "NUR SIGNALISIERUNGSKANAL" enthaltenden ersten Parameterwerten (PMW1) von den zweiten Telekommunikationsschnittstellen (RNTᵢ) zu Primär-Telekommunikationsschnittstellen (RBS2) der ersten Telekommunikationsschnittstellen (RBS1, RBS2, RBS3) übertragen werden,
i) die Signalisierungskanäle mit ersten Kanälen der netzspezifischen Teilsystemkanäle (TSKₙₛ) zum Verbinden der Signalisierungskanäle mit den Systemkanälen (SYK) bzw. zum Weiterleiten der Signalisierungskanäle der Telekommunkationsteilsysteme (RW-TTS) an die Telekommunikationssysteme (ISDN, PSTN) verbunden werden.

2. Verfahren nach Anspruch 1, **dadurch gekennzeichnet, daß**
die Anzahl der ersten Kanäle begrenzt ist.

3. Verfahren nach Anspruch 2, **dadurch gekennzeichnet, daß**
als Antwort auf die ersten Teilsystemnachrichten (TSN1) mit den ersten Parametern (PM1) und den ersten Parameterwerten (PMW1) zweite Teilsystemnachrichten (TSN2) mit zweiten Parametern (PM2) und die Inhalte "PRIMÄR-TELEKOMMUNIKATIONSSCHNITTSTELLE BELEGT" enthaltenden zweiten Parameterwerten (PMW2) von den Primär-Telekommunikationsschnittstellen (RBS2) zu den zweiten Telekommunikationsschnittstellen (RNTᵢ) übertragen werden, wenn die ersten Kanäle sämtlich belegt sind.

4. Verfahren nach Anspruch 3, **dadurch gekennzeichnet, daß**
die ersten Parameter (PM1) der ersten Teilsystemnachrichten (TSN1) mit den ersten Parameterwerten (PMW1) von den zweiten Telekommunikationsschnittstellen (RNTᵢ) zu Sekundär-Telekommunikationsschnittstellen (RBS3) der ersten Telekommunikationsschnittstellen (RBS1, RBS2, RBS3) übertragen werden, wenn die zweiten Telekommunikationsschnittstellen (RNTᵢ) die zweiten Teilsystemnachrichten (TSN2) mit den zweiten Parametern (PM2) und den zweiten Parameterwerten (PMW2) empfangen.

5. Verfahren nach Anspruch 4, **dadurch gekennzeichnet, daß**
die ersten Parameter (PM1) der ersten Teilsystemnachrichten (TSN1) mit den ersten Parameterwerten (PMW1) von den zweiten Telekommunikationsschnittstellen (RNT₁) zu den ersten Telekommunikationsschnittstellen (RBS1, RBS2, RBS3) solange übertragen werden, bis die zweiten Telekommunikationsschnittstellen (RNT₁) dritte Teilsystemnachrichten (TSN3) mit den ersten Parametern (PM1) und den ersten Parameterwerten (PMW1) empfangen.

6. Verfahren nach einem der Ansprüche 1 bis 5, **dadurch gekennzeichnet, daß**
das Telekommunikationssystem (ISDN, PSTN) ein ISDN-System und PSTN-System ist.

7. Verfahren nach einem der Ansprüche 1 bis 6, **dadurch gekennzeichnet, daß**
das Telekommunikationsteilsystem (RW-TTS) ein DECT-System ist.

8. Verfahren nach einem der Ansprüche 1 bis 6, **dadurch gekennzeichnet, daß**
das Telekommunikationsteilsystem (RW-TTS) ein GSM-System ist.

9. Verfahren nach einem der Ansprüche 1 bis 6, **dadurch gekennzeichnet, daß**
das Telekommunikationsteilsystem (RW-TTS) ein PHS-System, ein WACS-System oder ein PACS-System ist.

10. Verfahren nach einem der Ansprüche 1 bis 6, **dadurch gekennzeichnet, daß**
das Telekommunikationsteilsystem (RW-TTS) ein "IS-54"-System oder ein PDC-System ist.

11. Verfahren nach einem der Ansprüche 1 bis 6, **dadurch gekennzeichnet, daß**
das Telekommunikationsteilsystem (RW-TTS) ein CDMA-System, ein TDMA-System, ein FDMA-System oder ein bezüglich der genannten Übertragungsstandards hybrides System ist.

12. Verfahren nach einem der Ansprüche 1 bis 11, **dadurch gekennzeichnet, daß**
die erste Telekommunikationsschnittstelle (RBS1, RBS2, RBS3) eine DECT/GAP-spezifische Funkbasisstation, die zweite Telekommunikationsschnittstelle (RNTᵢ) ein DECT-spezifischer, ISDN-fähiger Funknetzabschluß und die dritte Telekommunikationsschnittstelle (RNTn_{d}) ein DECT-spezifischer, für n-fache Datenübertragung ausgelegter Funknetzabschluß ist.

13. Verfahren nach Anspruch 7, **dadurch gekennzeichnet, daß**
die ersten Teilsystemnachrichten (TSN1) DECT-spezifische "MAC-Protokollschicht"-Nachrichten "BEARER_REQUEST", die ersten Parameter (PM1) DECT-spezifische "MAC-Protokollschicht"Parameter "SERVICE TYPE", die ersten Parameterwerte (PMW1) mit den Inhalten "NUR SIGNALISIERUNGSKANAL" DECT-spezifische "MAC-Protokollschicht"-Parameterwerte "C_{f}-CHANNEL ONLY", die zweite Teilsystemnachrichten (TSN2) DECT-spezifische "MAC-Protokollschicht"-Nachrichten "RELEASE", die zweiten Parameter (PM2) DECT-spezifische "MAC-Protokollschicht"-Parameter "RELEASE REASON", die zweiten Parameterwerte (PMW2) mit den Inhalten "PRIMFÄR-TELEKOMMUNIKATIONSSCHNITTSTELLE BELEGT" DECT-spezifische "MAC-Protokollschicht"-Parameterwerte "RADIO BASESTATION BUSY" und die dritten Teilsystemnachrichten (TSN3) DECT-spezifische "MAC-Protokollschicht"-Nachrichten "BEARER_CONFIRM" sind.

## Claims

1. Method for controlling the setting up of telecommunication connections in telecommunication subsystems serving as local message transmission loops of telecommunication systems and having different network terminations in respect of the transmission channel requirements, in particular "ISDN/PSTN <-> DECT-specific RLL/WLL" systems, wherein
a) system messages (SYN) are transmitted on system channels (SYK) in the telecommunication systems,
b) the telecommunication subsystems (RW-TTS) contain a plurality of subsystem channels for transmitting subsystem messages (TSN) and the system messages (SYN),
c) the telecommunication subsystems (RW-TTS) have first telecommunication interfaces (RBS1, RBS2, RBS3) which are connected via network termination-specific subsystem channels (TSKₙₐₛ) to second telecommunication interfaces (RNTᵢ) embodied as the network terminations and/or third telecommunication interfaces (RNTn_{d}) and also via network-specific subsystem channels (TSKₙₛ) to the system channels (SYK),
d) the telecommunication subsystems (RW-TTS) are integrated into the telecommunication systems (ISDN, PSTN) via the telecommunication interfaces (RBS1, RBS2, RBS3, RNTᵢ, RNTn_{d}),
e) the network termination-specific subsystem channels (TSKₙₐₛ) contain signalling channels and user data channels,
f) the messages are transmitted from and to the second telecommunication interfaces (RNTᵢ) via the signalling channels and/or the user data channels, and the messages from and to the third telecommunication interfaces (RNTn_{d}) are transmitted via the user data channels,
g) first subsystem messages (TSN1) containing first parameters (PM1) are transmitted from the second telecommunication interfaces (RNTᵢ) and/or the third telecommunication interfaces (RNTn_{d}) to the first telecommunication interfaces (RBS1, RBS2, RBS3) for setting up the connection,
**characterised in that**
h) the first parameters (PM1) of the first subsystem messages (TSN1) having first parameter values (PMW1) having the contents "SIGNALLING CHANNEL ONLY" are transmitted from the second telecommunication interfaces (RNTᵢ) to primary telecommunication interfaces (RBS2) of the first telecommunication interfaces (RBS1, RBS2, RBS3),
i) the signalling channels are connected to first channels of the network-specific subsystem channels (TSKₙₛ) for connecting the signalling channels to the system channels (SYK) and/or for onward routing of the signalling channels of the telecommunication subsystems (RW-TTS) to the telecommunication systems (ISDN, PSTN).

2. Method according to claim 1, **characterised in that**
the number of first channels is limited.

3. Method according to claim 2, **characterised in that**
as a response to the first subsystem messages (TSN1) containing the first parameters (PM1) and the first parameter values (PMW1), second subsystem messages (TSN2) containing second parameters (PM2) and second parameter values (PMW2) having the contents "PRIMARY TELECOMMUNICATION INTERFACE BUSY" are transmitted from the primary telecommunication interfaces (RBS2) to the second telecommunication interfaces (RNTᵢ) when the first channels are all busy.

4. The method according to claim 3, **characterised in that**
the first parameters (PM1) of the first subsystem messages (TSN1) containing the first parameter values (PMW1) are transmitted from the second telecommunication interfaces (RNTᵢ) to secondary telecommunication interfaces (RBS3) of the first telecommunication interfaces (RBS1, RBS2, RBS3) when the second telecommunication interfaces (RNTᵢ) receive the second subsystem messages (TSN2) containing the second parameters (PM2) and the second parameter values (PMW2).

5. Method according to claim 4, **characterised in that**
the first parameters (PM1) of the first subsystem messages (TSN1) containing the first parameter values (PMW1) are transmitted from the second telecommunication interfaces (RNTᵢ) to the first telecommunication interfaces (RBS1, RBS2, RBS3) until the second telecommunication interfaces (RNTᵢ) receive third subsystem messages (TSN3) containing the first parameters (PM1) and the first parameter values (PMW1).

6. Method according to one of the claims 1 to 5, **characterised in that**
the telecommunication system (ISDN, PSTN) is an ISDN system and PSTN system.

7. Method according to one of the claims 1 to 6, **characterised in that**
the telecommunication subsystem (RW-TTS) is a DECT system.

8. Method according to one of the claims 1 to 6, **characterised in that**
the telecommunication subsystem (RW-TTS) is a GSM system.

9. Method according to one of the claims 1 to 6, **characterised in that**
the telecommunication subsystem (RW-TTS) is a PHS system, a WACS system or a PACS system.

10. Method according to one of the claims 1 to 6, **characterised in that**
the telecommunication subsystem (RW-TTS) is an "IS-54" system or a PDC system.

11. Method according to one of the claims 1 to 6, **characterised in that**
the telecommunication subsystem (RW-TTS) is a CDMA system, a TDMA system, an FDMA system or a hybrid system in respect of the aforementioned transmission standards.

12. Method according to one of the claims 1 to 11, **characterised in that**
the first telecommunication interface (RBS1, RBS2, RBS3) is a DECT/GAP-specific radio base station, the second telecommunication interface (RNTᵢ) is a DECT-specific, ISDN-capable radio network termination and the third telecommunication interface (RNTn_{d}) is a DECT-specific radio network termination which is designed for n-fold data transmission.

13. Method according to claim 7, **characterised in that**
the first subsystem messages (TSN1) are DECT-specific "MAC protocol layer" messages "BEARER_REQUEST", the first parameters (PM1) are DECT-specific "MAC protocol layer" parameters "SERVICE TYPE", the first parameter values (PMW1) having the contents "SIGNALLING CHANNEL ONLY" are DECT-specific "MAC protocol layer" parameter values "C_{f}-CHANNEL ONLY", the second subsystem messages (TSN2) are DECT-specific "MAC protocol layer" messages "RELEASE", the second parameters (PM2) are DECT-specific "MAC protocol layer" parameters "RELEASE REASON", the second parameter values (PMW2) having the contents "PRIMARY TELECOMMUNICATION INTERFACE BUSY" are DECT-specific "MAC protocol layer" parameter values "RADIO BASESTATION BUSY", and the third subsystem messages (TSN3) are DECT-specific "MAC protocol layer" messages "BEARER_CONFIRM".

## Revendications

1. Procédé pour contrôler l'établissement de liaisons de télécommunication dans des systèmes partiels de télécommunication servant de boucles locales de transmission d'informations de systèmes de télécommunication avec des terminaisons réseau différentes en ce qui concerne les demandes de canal de transmission, en particulier les systèmes RLL/WLL spécifiques ISDN/PSTN ↔ DECT, moyennant quoi
a) des informations de système (SYN) sont transmises dans les systèmes de télécommunication (ISDN, PSTN) sur des canaux de système (SYK),
b) les systèmes partiels de télécommunication (RW-TTS) contiennent plusieurs canaux de système partiel (TSK) pour la transmission d'informations de système partiel (TSN) et des informations de système (SYN),
c) les systèmes partiels de télécommunication (RW-TTS) présentent des premières interfaces de télécommunication (RBS1, RBS2, RBS3), qui sont reliées par des canaux de système partiel (TSKₙₐₛ) spécifiques à la terminaison réseau à des secondes interfaces de télécommunication (RNTᵢ) conçues comme les terminaisons réseau et/ou des troisièmes interfaces de télécommunication (RNT_{n_{d}} ) ainsi que par des canaux de système partiel (TSKₙₛ) spécifiques au réseau aux canaux de système (SYK),
d) les systèmes partiels de télécommunication (RW-TTS) sont intégrés par les interfaces de télécommunication (RBS1, RBS2, RBS3, RNTᵢ, RNT_{n_{d}}) dans les systèmes de télécommunication (ISDN, PSTN),
e) les canaux de système partiel (TSKₙₐₛ) spécifiques à la terminaison réseau contiennent des canaux de signalisation et des canaux de données utiles,
f) les informations venant des secondes interfaces de télécommunication (RNTᵢ) resp. allant à ces interfaces sont transmises par les canaux de signalisation et/ou les canaux de données utiles et les informations venant des troisièmes interfaces de télécommunication (RNT_{n_{d}}) resp. allant à ces interfaces sont transmises au moyen des canaux de données utiles.
g) Des premières informations de système partiel (TSN1) sont transmises avec des premiers paramètres (PM1) des secondes interfaces de télécommunication (RNTᵢ) et/ou des troisièmes interfaces de télécommunication (RNT_{n_{d}} ) aux premières interfaces de télécommunication (RBS1, RBS2, RBS3) pour l'établissement de la liaison,
**caractérisé en ce que**
h) les premiers paramètres (PM1) des premières informations de système partiel (TSN1) sont transmises avec des premières valeurs de paramètre (PMW1) contenant les contenus "SEULEMENT CANAL DE SIGNALISATION" des secondes interfaces de télécommunication (RNTᵢ) à des interfaces de télécommunication primaires (RBS2) des premières interfaces de télécommunication (RBS1, RBS2, RBS3),
i) les canaux de signalisation sont liés avec des premiers canaux des canaux de système partiel (TSKₙₛ) spécifiques au réseau pour la liaison des canaux de signalisation avec les canaux de système (SYK) resp. pour la transmission des canaux de signalisation des systèmes partiels de télécommunication (RW-TTS) aux systèmes de télécommunication (ISDN, PSTN).

2. Procédé selon la revendication 1, **caractérisé en ce que**
le nombre des premiers canaux est limité.

3. Procédé selon la revendication 2, **caractérisé en ce que**,
comme réponse aux premières informations de système partiel (TSN1) avec les premiers paramètres (PM1) et les premières valeurs de paramètre (PMW1), des secondes informations de système partiel (TSN2) avec des seconds paramètres (PM2) et des secondes valeurs de paramètre (PMW2) contenant les contenus "INTERFACE DE TELECOMMUNICATION PRIMAIRE OCCUPEE" sont transmises des interfaces de télécommunication primaires (RBS2) aux secondes interfaces de télécommunication (RNTᵢ) lorsque les premiers canaux sont tous occupés.

4. Procédé selon la revendication 3, **caractérisé en ce que**
les premiers paramètres (PM1) des premières informations de système partiel (TSN1) sont transmis avec les premières valeurs de paramètre (PMW1) des secondes interfaces de télécommunication (RNTᵢ) aux interfaces secondaires de télécommunication (RBS3) des premières interfaces de télécommunication (RBS1, RBS2, RBS3) lorsque les secondes interfaces de télécommunication (RNTᵢ) reçoivent les secondes informations de système partiel (TSN2) avec les seconds paramètres (PM2) et les secondes valeurs de paramètre (PMW2).

5. Procédé selon la revendication 4, **caractérisé en ce que**
les premiers paramètres (PM1) des premières informations de système partiel (TSN1) sont transmis avec les premières valeurs de paramètre (PMW1) des secondes interfaces de télécommunication (RNTᵢ) aux premières interfaces de télécommunication (RBS1, RBS2, RBS3) jusqu'à ce que les secondes interfaces de télécommunication (RNTᵢ) reçoivent des troisièmes informations de système partiel (TSN3) avec les premiers paramètres (PM1) et avec les premières valeurs de paramètre (PMW1).

6. Procédé selon l'une quelconque des revendications 1 à 5, **caractérisé en ce que**
le système de télécommunication (ISDN, PSTN) est un système ISDN et un système PSTN.

7. Procédé selon l'une quelconque des revendications 1 à 6, **caractérisé en ce que**
le système partiel de télécommunication (RW-TTS) est un système DECT.

8. Procédé selon l'une quelconque des revendications 1 à 6, **caractérisé en ce que**
le système partiel de télécommunication (RW-TTS) est un système GSM.

9. Procédé selon l'une quelconque des revendications 1 à 6, **caractérisé en ce que**
le système partiel de télécommunication (RW-TTS) est un système PHS, un système WACS ou un système PACS.

10. Procédé selon l'une quelconque des revendications 1 à 6, **caractérisé en ce que**
le système partiel de télécommunication (RW-TTS) est un système "IS-54" ou un système PDC.

11. Procédé selon l'une quelconque des revendications 1 à 6, **caractérisé en ce que**
le système partiel de télécommunication (RW-TTS) est un système COMA, un système TDMA, un système FDMA ou un système hybride en ce qui concerne lesdits standards de transmission.

12. Procédé selon l'une quelconque des revendications 1 à 11, **caractérisé en ce que**
la première interface de télécommunication (RBS1, RBS2, RBS3) est une station de base radio spécifique à DECT/GAP, la seconde interface de télécommunication (RNTᵢ) une terminaison réseau radio spécifique à DECT est compatible ISDN et la troisième interface de télécommunication (RNT_{n_{d}}) une terminaison réseau radio spécifique à DECT, et conçue pour la transmission n fois de données.

13. Procédé selon la revendication 7, **caractérisé en ce que**
les premières informations de système partiel (TSN1) sont des informations de "couche de protocole MAC" "BEARER REQUEST" spécifiques à DECT, les premiers paramètres (PM1) des paramètres de "couche de protocole MAC" "SERVICE TYPE" spécifiques à DECT, les premières valeurs de paramètre (PMW1) avec les contenus "SEULEMENT CANAL DE SIGNALISATION" des valeurs de paramètre de "couche de protocole MAC" "C_{f}-CHANNEL ONLY" spécifiques à DECT, les secondes informations de système partiel (TSN2) des informations de "couche de protocole MAC" "RELEASE" spécifiques à DECT, les seconds paramètres (PM2) des paramètres de "couche de protocole MAC" "RELEASE REASON" spécifiques à DECT, les secondes valeurs de paramètre (PMW2) avec les contenus "INTERFACE DE TELECOMMUNICATION PRIMAIRE OCCUPEE" des valeurs de paramètre de "couche de protocole MAC" "RADIO BASESTATION BUSY" spécifiques à DECT et les troisièmes informations de système partiel (TSN3) des informations de "couche de protocole MAC" "BEARER CONFIRM" spécifiques à DECT.
